# EUROPEAN PATENT APPLICATION

(11) **EP 2 671 624 A1**
(43) Date of publication of application: **11.12.2013**
(21) Application number: 13170842.2
(22) Date of filing: 06.06.2013
(51) Int. Cl.: B01D 53/04, F02M 25/08

(54) **Evaporated fuel treatment device**

(30) Priority: 08.06.2012 JP 2012130314
(71) Applicant: MAHLE Filter Systems Japan Corporation, Toshima-ku, Tokyo 170-0004 (JP)
(72) Inventor: Arase, Yuji, Toshima-ku, Tokyo 170-0004 (JP); Yoshida, Hiroyuki, Toshima-ku, Tokyo 170-0004 (JP); Horimatsu, Toshinobu, Toshima-ku, Tokyo 170-0004 (JP)
(74) Representative: Grünecker, Kinkeldey, Stockmair & Schwanhäusser

(57) **Abstract**

An evaporated fuel treatment device including a cylindrical casing body, a granular adsorbent filled in the casing body, an air permeable member stacked on the granular adsorbent, a retainer member stacked on the air permeable member, and a tooth-shaped positioning retention mechanism disposed between an inner circumferential surface of the casing body and an outer circumferential surface of the retainer member. The tooth-shaped positioning retention mechanism allows the retainer member to hold the air permeable member in a compressively deformed state, enables positioning and retention of the retainer member in an optional position relative to the casing body in a pushing direction of the retainer member, and inhibits displacement of the retainer member in a removal direction of the retainer member.

## Description

### BACKGROUND OF THE INVENTION

The present invention relates to an evaporated fuel treatment device (also referred to as a canister) that is used for adsorbing fuel evaporated in a fuel tank of an automobile in order to allow combustion of the fuel in an engine during operation of the engine.

For example, a so-called carbon canister using activated carbon as an adsorbent is known as a conventional evaporated fuel treatment device. The canister has a flow path therein through which evaporated fuel and atmospheric air are allowed to flow. The evaporated fuel generated from the fuel tank is temporarily adsorbed in the activated carbon in the canister. On the other hand, during an operation of an engine, atmospheric air is introduced into the canister using an engine negative pressure, and the evaporated fuel adsorbed in the activated carbon is desorbed therefrom. The evaporated fuel thus desorbed is sucked into the engine, thereby serving for combustion of the evaporated fuel.

Further, for example, as described in Japanese Patent Application Unexamined Publication No. 2009-127603 and Japanese Patent Application Unexamined Publication No. 2006-299849, the activated carbon as the adsorbent is filled in a casing made of a resin material or a metal material, and is retained in a pressed state with a force of a suitable magnitude using an elastic force of a compression coil spring made of metal or a urethane foam which are disposed within the casing together with the activated carbon. That is, a so-called pressing retention structure has been adopted.

The reason for adopting the pressing retention structure resides in that the activated carbon as the adsorbent such as granulated carbon and crushed carbon is in the form of a granule. A position of an end surface of an activated carbon layer is finely changed due to variation in fill amount or fill rate of the activated carbon having the granular shape, or variation in capacity of the casing which is caused upon manufacturing the casing. In order to adsorb such a variation of the position of the end surface of the activated carbon layer and suppress so-called rattling motion of the granular activated carbon after being filled in the casing, the above pressing retention structure using the above-described elastic member is adopted.

In addition, a filtering function is also required in a portion of the casing in which the metallic compression coil spring and the urethane foam are disposed, in order to prevent leakage of the activated carbon and ensure air permeability. In a case where the metallic compression coil spring is used, a porous plate-shaped grid is used together therewith so as to perform the filtering function. In contrast, in a case where the urethane foam is used, the urethane foam can perform the filtering function by itself.

### SUMMARY OF THE INVENTION

However, in a case where the metallic compression coil spring is used in the pressing retention structure for the activated carbon, an excellent elastic characteristic can be attained but an increased cost should be caused. On the other hand, in a case where the urethane foam is used in the pressing retention structure for the activated carbon, the urethane foam must be used in an excessively compressed and deformed manner in order to adsorb the variation in position of the end surface of the activated carbon as described above. As a result, there is a fear that air-flow resistance becomes too large to ensure a necessary air permeability. In addition, there still remains such a problem that the urethane foam is deteriorated in durability due to adverse influence by permanent set in fatigue or the like which is caused by using the urethane foam in the excessively compressed and deformed manner.

The present invention has been made in view of the above-described problems. It is an object of the present invention to provide an evaporated fuel treatment device having a construction for retaining activated carbon in a pressing manner by using a urethane foam advantageous in cost performance, the evaporated fuel treatment device being capable of adsorbing the above-described variation in position of an end surface of an activated carbon layer without excessively compressing and deforming the urethane foam and capable of retaining the activated carbon in the pressing manner with an elastic force of a suitable magnitude.

In a first aspect of the present invention, there is provided an evaporated fuel treatment device including:
a cylindrical casing body having one open end;
a granular adsorbent filled in the casing body, the granular adsorbent serving to adsorb and desorb evaporated fuel;
an air permeable member disposed on a side of the one open end of the casing body in a stacked relation to the granular adsorbent, the air permeable member being made of an elastic molding material,
a retainer member disposed on the side of the one open end of the casing body in a stacked relation to the air permeable member, the retainer member being in the form of a grid or a porous plate,
a cover member mounted to the one open end of the casing body to close the one open end of the casing body; and
a tooth-shaped positioning retention mechanism disposed between an inner circumferential surface of the casing body and an outer circumferential surface of the retainer member,
wherein the tooth-shaped positioning retention mechanism allows the retainer member to hold the air permeable member in a compressively deformed state and enables positioning and retention of the retainer member in an optional position relative to the casing body in a pushing direction in which the retainer member is pushed into the casing body, and
wherein the tooth-shaped positioning retention mechanism inhibits displacement of the retainer member in a removal direction in which the retainer member is removed from the casing body.

In a second aspect of the present invention, there is provided the evaporated fuel treatment device according to the first aspect of the present invention, wherein the tooth-shaped positioning retention mechanism enables positioning and retention of the retainer member in a stepwise optional position relative to the casing body in the pushing direction.

In a third aspect of the present invention, there is provided the evaporated fuel treatment device according to the second aspect of the present invention,
wherein the casing body has a circular section,
wherein the air permeable member and the retainer member have a circular section,
wherein the tooth-shaped positioning retention mechanism includes a helical toothed grooved portion formed in one of the inner circumferential surface of the casing body on the side of the one open end thereof and the outer circumferential surface of the retainer member, and a toothed projecting portion formed on the other of the inner circumferential surface of the casing body on the side of the one open end thereof and the outer circumferential surface of the retainer member, and
wherein when the retainer member is screwed into the casing body, the helical toothed grooved portion and the toothed projecting portion are brought into meshing engagement with each other to enable positioning and retention of the retainer member in the stepwise optional position relative to the casing body in the pushing direction through the meshing engagement therebetween and inhibit displacement of the retainer member in the removal direction through the meshing engagement therebetween.

In a fourth aspect of the present invention, there is provided the evaporated fuel treatment device according to the third aspect of the present invention, wherein the helical toothed grooved portion is formed in the inner circumferential surface of the casing body on the side of the one open end thereof, and the toothed projecting portion is formed on the outer circumferential surface of the retainer member.

Upon assembling the evaporated fuel treatment device according to the present invention, a predetermined amount of the granular adsorbent is filled in the one openended casing body, and the air permeable member and the retainer member are stacked on the granular adsorbent in this order. Subsequently, the retainer member is pushed into the casing body before closing the one open end of the casing body by the cover. Since the tooth-shaped positioning retention mechanism enables positioning and retention of the retainer member in an optional position relative to the casing body in the pushing direction of the retainer member, a pushing force being applied to the retainer member is released at a time in which the air permeable member is appropriately compressively deformed. As a result, the retainer member can be held and retained in the optional position so that removal of the retainer member from the casing body can be prevented. In addition, the air permeable member can be held in the compressively deformed state.

The evaporated fuel treatment device according to the present invention can attain the following effects. As compared to an evaporated fuel treatment device using a compression coil spring made of metal in a pressing retention structure for activated carbon, the evaporated fuel treatment device according to the present invention can serve to reduce a cost thereof. Further, the evaporated fuel treatment device according to the present invention can adsorb variation in position of an end surface of an adsorbent layer accommodated within a casing without excessively compressing and deforming such an elastic molding material as a urethane foam. Further, the evaporated fuel treatment device according to the present invention can stably maintain a suitably compressed and deformed state of the elastic molding material, and can serve to minimize a thickness of the elastic molding material. Accordingly, the evaporated fuel treatment device according to the present invention can ensure a sufficient air permeability necessary to the elastic molding material and can enhance durability of the elastic molding material.

Especially, in the evaporated fuel treatment device according to the present invention, a tooth-shaped positioning retention mechanism is constituted of a combination of a toothed grooved portion and a toothed projection portion. With this construction, once the retainer member has been pushed into the casing, the toothed grooved portion and the toothed projection portion are meshed with each other so that the retainer member cannot be removed from the casing. As a result, positioning and retention of the permeable member and the retainer member relative to the casing can be more enhanced by the tooth-shaped positioning retention mechanism.

### BRIEF DESCRIPTION OF THE DRAWINGS

FIG. 1 is a sectional view of an evaporated fuel treatment device according to a first embodiment of the present invention.
FIG. 2 is an explanatory sectional view of an essential part of the evaporated fuel treatment device shown in FIG. 1.
FIG. 3 is an exploded perspective view of the essential part shown in FIG. 2, and shows components of the essential part.
FIG. 4 is a sectional perspective view showing a grid assembled to a casing body of the evaporated fuel treatment device as shown in FIG. 3.
FIG. 5 is an explanatory plan view of the casing body as shown in FIG. 4.
FIG. 6 is a sectional view of an evaporated fuel treatment device according to a second embodiment of the present invention.
FIG. 7 is an enlarged sectional view of an essential part of an evaporated fuel treatment device according to a third embodiment of the present invention.
FIG. 8 is an enlarged sectional view of an essential part of an evaporated fuel treatment device according to a fourth embodiment of the present invention.

### DETAILED DESCRIPTION OF THE PREFERRED EMBODIMENT

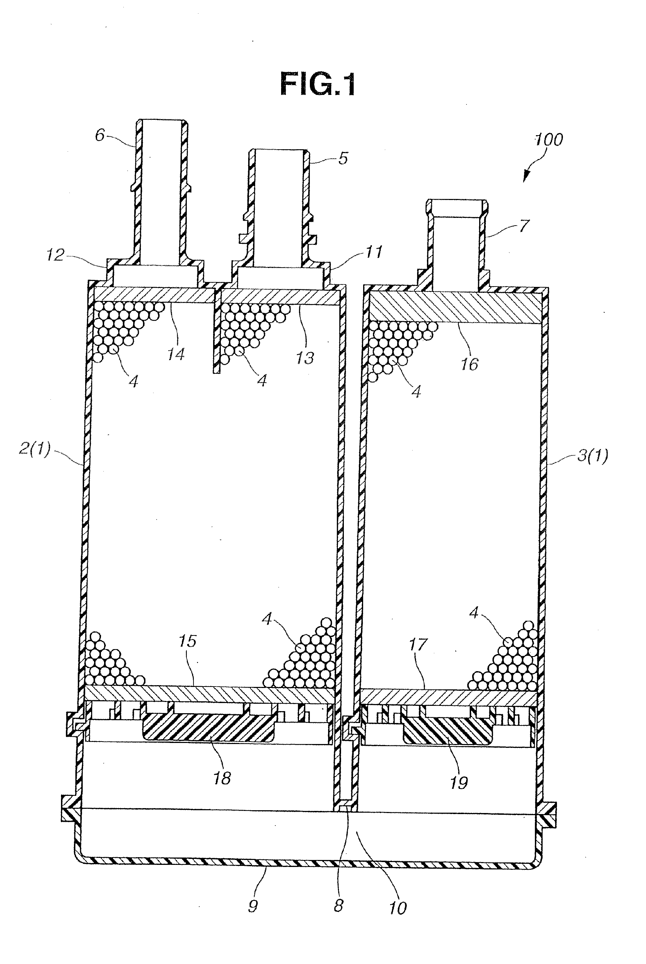

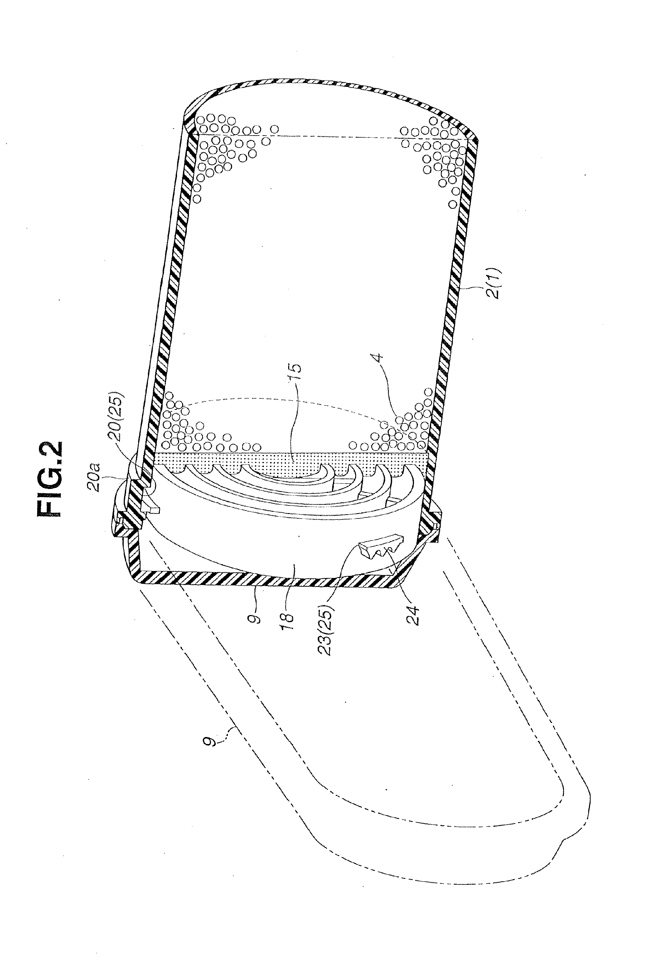

Referring to FIG. 1 to FIG. 5, an evaporated fuel treatment device (hereinafter referred to simply as a canister) according to a first embodiment of the present invention will be explained hereinafter. FIG. 1 shows a section of a so-called dual chamber canister as a whole. FIG. 2 to FIG. 5 show a construction of details of the canister shown in FIG. 1.

As shown in FIG. 1, a canister 100 includes a hermetically sealed casing 1, and an adsorbent 4 filled in the casing 1. The adsorbent 4 is granular activated carbon. The granular activated carbon may be generally in the form of granulated carbon particles or crushed carbon particles. The casing 1 includes a charge port 5, a purge port 6, an atmospheric vent port 7 and a cover member 9. The cover member 9 is disposed at one end of the casing 1. The charge port 5, the purge port 6 and the atmospheric vent port 7 are disposed at the other end of the casing 1.

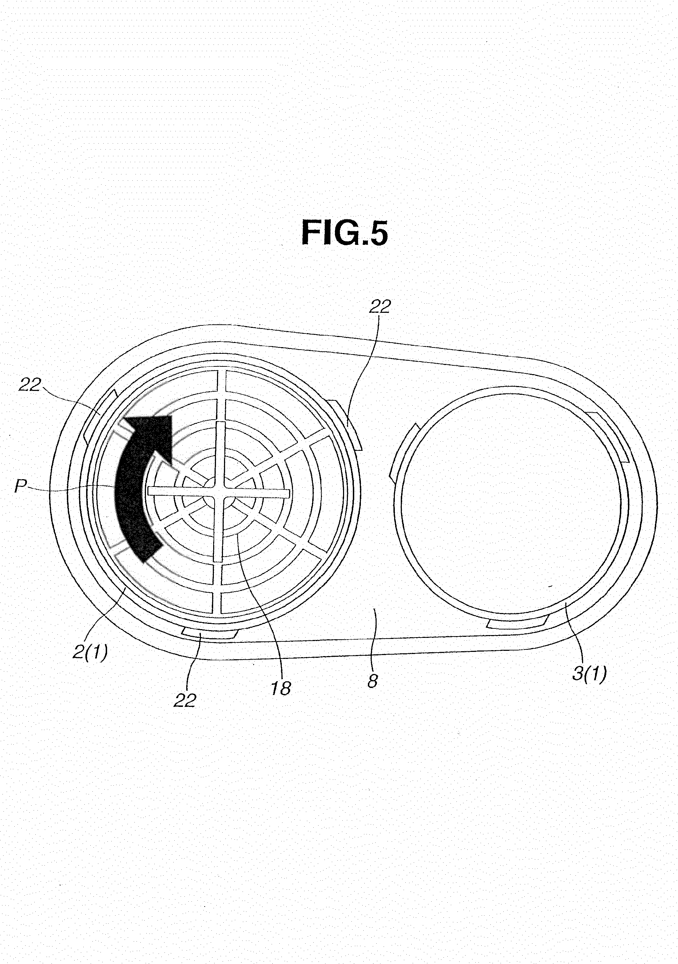

Specifically, the casing 1 includes two cylindrical casing bodies 2, 3 made of a predetermined resin material such as a polyamide resin and the other suitable resin. Each of the casing bodies 2, 3 has one open end (a lower end as shown in FIG. 1). The cylindrical casing bodies 2, 3 are different in size from each other. In this embodiment, one cylindrical casing body 2 has a circular section having a large diameter, and the other cylindrical casing body 3 has a circular section having a diameter smaller than that of the casing body 2. The casing bodies 2, 3 are disposed parallel to each other, and integrally connected with each other through a connecting wall portion 8 (also see FIG. 5) located on a side of the one open ends. The one open ends of the casing bodies 2, 3 are closed by the common cover member 9 having an oval shallow dish shape. The cover member 9 serves as a bottom wall of the casing 1. The cover member 9 is connected with the one open end of each of the casing bodies 2, 3 by a suitable method, for instance, welding after the adsorbent 4 is filled in the casing bodies 2, 3. Thus, the casing bodies 2, 3 are formed as an integral body. With this construction, an inside space in the casing body 2 and an inside space in the casing body 3 are separated from each other, but are communicated with each other through a narrow communication passage 10 located on the side of the cover member 9. Further, as seen from FIG. 1, each of the casing bodies 2, 3 is gently tapered from a side of the cover member 9 toward the other end (an upper end) thereof such that a sectional area of each of the casing bodies 2, 3 gradually becomes smaller.

The large-diameter casing body 2 has two chambers 11, 12 at one end (upper end) thereof. The chambers 11, 12 each having a predetermined capacity are formed parallel with each other and project upwardly. Opened to one chamber 11 is the charge port 5 having a diameter smaller than that of one chamber 11. Opened to the other chamber 12 is the purge port 6 having a diameter smaller than that of the other chamber 12. On the other hand, the small-diameter casing body 3 has no chamber at one end thereof, and the atmospheric vent port 7 is directly opened to the one end of the small-diameter casing body 3. The charge port 5 serves as an evaporated fuel introducing portion through which evaporated fuel is introduced from a fuel tank (not shown) into the casing 1. The purge port 6 serves as an evaporated fuel purging portion through which fuel desorbed from the adsorbent 4 by introducing atmospheric air as explained later is returned to an intake system of an engine. Further, the atmospheric vent port 7 serves as an atmospheric air introducing portion through which atmospheric air is positively introduced from an outside into the casing 1.

The large-diameter casing body 2 is fully and uniformly filled with the granular adsorbent 4 between sheet screens 13, 14 on a side of the chambers 11, 12 and an air permeable member 15 on a side of the one open end of the casing body 2. The sheet screen 13 is disposed at one end (lower end) of the chamber 11, and the sheet screen 14 is disposed at one end (lower end) of the chamber 12. Each of the sheet screens 13, 14 is made of an air permeable member such as a nonwoven fabric or a urethane foam which has a predetermined thickness. The air permeable member 15 is made of an elastic molding material, and has a circular section corresponding to the circular section of the casing body 2. In this embodiment, a urethane foam having a predetermined thickness is used as the air permeable member 15. The adsorbent 4 is retained in a pressed state by an elastic force of a suitable magnitude which is applied by the air permeable member 15 as explained later.

Similarly, the small-diameter casing body 3 is fully and uniformly filled with the granular adsorbent 4 between a sheet screen 16 on a side of the atmospheric vent port 7 and an air permeable member 17 on a side of the one open end of the casing body 3. The sheet screen 16 is disposed at one end (lower end) of the atmospheric vent port 7, and made of an air permeable member such as a nonwoven fabric or a urethane foam which has a predetermined thickness. The air permeable member 17 is made of an elastic molding material, and has a circular section corresponding to the circular section of the casing body 3. In this embodiment, a urethane foam is used as the air permeable member. Similarly to the adsorbent 4 within the casing body 2, the adsorbent 4 within the casing body 3 is retained in a pressed state by an elastic force of a suitable magnitude which is applied by the air permeable member 17.

As described above, the large-capacity casing body 2 filled with the adsorbent 4 serves as a main chamber of the canister 100, and the small-capacity casing body 3 filled with the adsorbent 4 serves as a subsidiary chamber of the canister 100.

A cylindrical retainer member 18 having a circular section is arranged within the large-diameter casing body 2 in a stacked relation to the air permeable member 15. The retainer member 18 has an air permeability and a rigidity. In this embodiment, a cylindrical grid made of a resin material is used as the retainer member 18. With the arrangement of the retainer member 18, the air permeable member 15 is backed up by the retainer member 18 on the side of the one open end of the large-diameter casing body 2.
The retainer member 18 per se is held in place by itself relative to the large-diameter casing body 2 as explained later. The retainer member 18 serves as a spacer to ensure a predetermined clearance between the retainer member 18 and the cover member 9.

The small-diameter casing body 3 has the same construction as the above-described construction of the large-diameter casing body 2. A cylindrical retainer member 19 having a circular section is arranged within the small-diameter casing body 3 in a stacked relation to the air permeable member 17. The retainer member 19 has an air permeability and a rigidity. In this embodiment, a cylindrical grid made of a resin material is used as the retainer member 19. With the arrangement of the retainer member 19, the air permeable member 17 is backed up by the retainer member 17 on the side of the one open end of the small-diameter casing body 3. The retainer member 19 per se is held in place by itself relative to the small-diameter casing body 3 as explained later. The retainer member 19 serves as a spacer to ensure a predetermined clearance between the retainer member 19 and the cover member 9.

As described above, in both the casing bodies 2 and 3, the screens 13, 14, 16, the air permeable members 15, 17 and the retainer members 18, 19 are arranged on both sides of the adsorbent 4 (i.e., on both the upper side and the lower side of the adsorbent 4) as shown in FIG. 1. With this construction, the adsorbent 4 can be prevented from leaking out towards the sides of the charge port 5, the purge port 6, the atmospheric vent port 7 and the cover member 9 through the screens 13, 14, 16, the air permeable members 15, 17 and the retainer members 18, 19. In addition, the adsorbent 4 as a whole can be retained in a suitably pressed state by an elastic force of each of the air permeable members 15, 17 which is exerted on the adsorbent 4. As a result, useless displacement of the adsorbent 4 and so-called rattling motion of the adsorbent 4 can be suppressed.

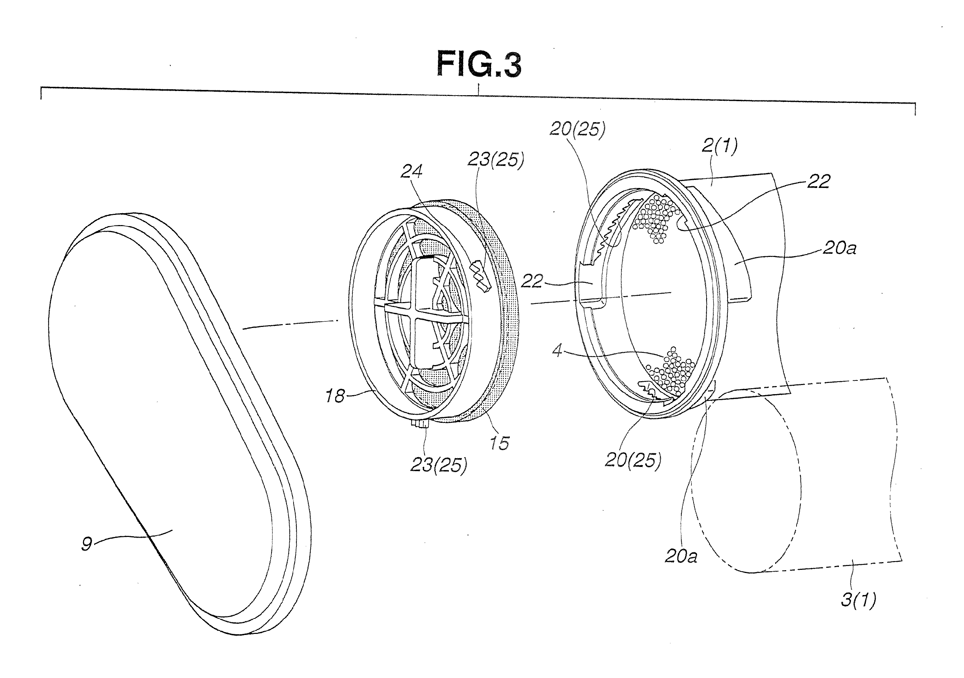

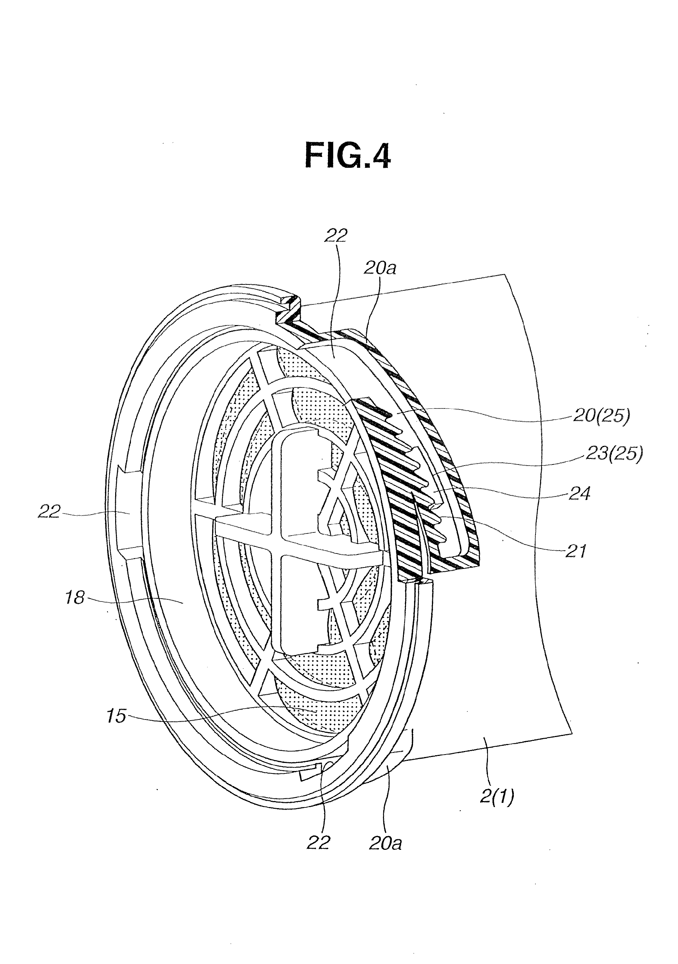

FIG. 2 to FIG. 4 show details of the side of the one open end of the large-diameter casing body 2 as shown in FIG. 1. FIG. 2 is a sectional perspective view of the side of the one open end of the large-diameter casing body 2, showing the air permeable member 15, the retainer member 18 and the cover member 9. FIG. 3 is an exploded perspective view of the side of the large-diameter casing body 2 as shown in FIG. 2. FIG. 4 shows an assembled state in which the retainer member 18 as the spacer is assembled to the side of the one open end of the large-diameter casing body 2. FIG. 5 is an explanatory plan view of the casing bodies 2, 3 when viewer from the side of the one open ends thereof, but omits details of the casing body 3.

As shown in FIG. 2 to FIG. 4, a helical toothed grooved portion 20 is formed at a helix angle in an inner circumferential surface of the large-diameter casing body 2 on a side of the one open end of the large-diameter casing body 2 to which the cover member 9 is mounted. In this embodiment, the toothed grooved portion 20 is located in each of three positions equidistantly spaced from each other in a circumferential direction of the large-diameter casing body 2. Specifically, as shown in FIG. 3, the large-diameter casing body 2 has a bulge portion 20a on the side of the one open end thereof. The bulge portion 20a is bulged in a radially outward direction of the large-diameter casing body 2. The toothed grooved portion 20 is formed within the bulge portion 20a as explained in detail later.
In FIG. 4, the bulge portion 20a is cut out in the circumferential direction of the large-diameter casing body 2 for the sake of clearly illustrating a ratchet-teeth or sawteeth shape of a plurality of teeth 21 formed in the toothed grooved portion 20.

As seen from FIG. 3 to FIG. 5, the toothed grooved portion 20 is recessed in the bulge portion 20a by a predetermined amount (depth) from the inner circumferential surface of the large-diameter casing body 2 in a radially outward direction of the large-diameter casing body 2. The teeth 21 are formed on one of opposed inner peripheral surfaces defining the toothed grooved portion 20 which is located on a side close to the one open end of the large-diameter casing body 2. The toothed grooved portion 20 has an introduction portion 22 at an initial end thereof on the side of the one open end of the large-diameter casing body 2. The introduction portion 22 is opened to an one open end surface of the large-diameter casing body 2 to which the cover member 9 is fixed. A toothed projecting portion 23 as a counterpart of the toothed grooved portion 20 is introduced into the toothed grooved portion 20 through the introduction portion 22 as explained later. Thus, the introduction portion 22 serves to receive the toothed projecting portion 23.

The toothed projecting portion 23 is formed at a helix angle on an outer circumferential surface of the retainer member 18 mounted to the side of the one open end of the large-diameter casing body 2. In this embodiment, the toothed projecting portion 23 is located in each of three positions equidistantly spaced from each other in a circumferential direction of the retainer member 18. The toothed projecting portion 23 projects from the outer circumferential surface of the retainer member 18 in a radially outward direction of the retainer member 18. A plurality of teeth 24 are formed on one of opposed outer peripheral surfaces of the toothed projecting portion 23 which is located on a side close to the one open end of the large-diameter casing body 2. The teeth 24 are configured to be meshing-engageable with the teeth 21 of the toothed grooved portion 20. In this embodiment, the teeth 24 have a ratchet-teeth or sawteeth shape, similarly to the teeth 21 of the toothed grooved portion 20.

An operation of assembling the retainer member 18 to the large-diameter casing body 2 is explained by referring to FIG. 3 to FIG. 5. Under the condition that the introduction portion 22 of the toothed grooved portion 20 in each of the three circumferential positions of the large-diameter casing body 2 and the toothed projecting portion 23 in each of the three circumferential positions of the retainer member 18 are aligned with each other so as to be identical in phase to each other, the retainer member 18 is rotated in a clockwise direction as indicated by arrow P shown in FIG. 5 while being pushed into the large-diameter casing body 2 through the open end thereof. The retainer member 18 is screwed and fixed into the large-diameter casing body 2 on the same principle as that of screwing function. As a result, the air permeable member 15 is held in an appropriately compressively deformed state while being backed up by the retainer member 18.

By rotating the retainer member 18 while pushing the retainer member 18 into the large-diameter casing body 2, the teeth 24 of the respective toothed projecting portions 23 can be brought into meshing engagement with the teeth 21 of the respective toothed grooved portions 20. Owing to the meshing engagement between the teeth 24 and the teeth 21, the retainer member 18 can be placed and retained in a stepwise optional position relative to the large-diameter casing body 2 in a pushing (screwing) direction in which the retainer member 18 is pushed (screwed) into the large-diameter casing body 2. In addition, it is possible to inhibit displacement of the retainer member 18 in a removal direction in which the retainer member 18 is removed from the large-diameter casing body 2. Accordingly, removal of the retainer member 18 from the large-diameter casing body 2 can be substantially suppressed. In other words, the retainer member 18 can be screwed into the large-diameter casing body 2 by rotating in the clockwise direction, but cannot be substantially rotated in the counterclockwise direction to be removed from the large-diameter casing body 2.

Thus, the toothed grooved portions 20 of the large-diameter casing body 2 and the toothed projecting portions 23 cooperate with each other to form a tooth-shaped positioning retention mechanism 25 that allows the retainer member 18 to hold the air permeable member 15 in the compressively deformed state and enables positioning and retention of the retainer member 18 relative to the large-diameter casing body 2 in an optional position in the pushing (screwing) direction in which the retainer member 18 is pushed (screwed) into the large-diameter casing body 2. Similarly to the large-diameter casing body 2, the small-diameter casing body 3 has a tooth-shaped positioning retention mechanism that has the same construction as that of the tooth-shaped positioning retention mechanism 25 to thereby allows the retainer member 19 to hold the air permeable member 17 in the compressively deformed state and enable positioning and retention of the retainer member 19 relative to the small-diameter casing body 3.

If the tooth-shaped positioning retention mechanism 25 formed by the toothed grooved portion 20 and the toothed projecting portion 23 is structurally simplified, the tooth-shaped positioning retention mechanism 25 can be replaced with a mechanism constituted of a grooved cam and a pin engaged with the grooved cam. Accordingly, at least the toothed projecting portion 23 is not particularly limited to the helical form, and may be any other shape like a pin.

An operation of the thus constructed canister 100 is explained hereinafter. When a vehicle is in a stopped state, evaporated fuel generated from a fuel tank (not shown) is introduced into the large-diameter casing body 2 through the charge port 5 shown in FIG. 1, and is adsorbed (charged) by the adsorbent 4 in the large-diameter casing body 2 and the adsorbent 4 in the small-diameter casing body 3.

Specifically, a part of the evaporated fuel which is not be adsorbed by the adsorbent 4 in the large-diameter casing body 2 passes through the air permeable member 15 and the retainer member 18 on a lower side of the adsorbent 4, and flows into the small-diameter casing body 3 through the communication passage 10, the retainer member 19 and the air permeable member 17. Thus, a flow direction of the part of the evaporated fuel is changed in the communication passage 10 to allow the part of the evaporated fuel to flow through a U-shaped path. Subsequently, the part of the evaporated fuel enters into the adsorbent 4 in the small-diameter casing body 3, and then, is adsorbed by the adsorbent 4 in the small-diameter casing body 3.

On the other hand, when a vehicle engine is operated, atmospheric air is introduced from the atmospheric vent port 7 when intake of air takes place through the purge port 6 from the casing 1. The atmospheric air introduced passes through the small-diameter casing body 3 and the large-diameter casing body 2, and is sucked into a side of the engine through the purge port 6. Owing to the flow of the introduced atmospheric air, the adsorbent 4 in the small-diameter casing body 3 and the adsorbent 4 in the large-diameter casing body 2 are purged so that the evaporated fuel adsorbed by the adsorbents 4 is desorbed, sucked into the side of the engine together with the introduced atmospheric air, and subjected to combustion treatment. As a result, the absorption capacity of each of the adsorbents 4 can be renewed and regenerated. The mechanism of absorption and desorption of the evaporated fuel by the adsorbent 4 is basically the same as that of the conventional adsorbent.

The canister 100 shown in FIG. 1 and FIG. 2 is assembled as follows. The casing 1 without the cover member 9 is turned upside down such that the open end surfaces of the respective casing bodies 2, 3 without being filled with the adsorbents 4 are directed upwardly. In this state, the respective screens 13, 14, 16 are inserted into the casing bodies 2, 3 through the open ends thereof. Next, a necessary amount of activated carbon particles as the adsorbent 4 is charged into each of the casing bodies 2, 3, and the activated carbon particles charged in the casing bodies 2, 3 are leveled off such that top surfaces thereof are substantially parallel to each other. Subsequently, same assembling operation is carried out on the side of the large-diameter casing body 2 and on the side of the small-diameter casing body 3. Therefore, only the assembling operation on the side of the casing body 2 is explained hereinafter.

After the activated carbon particles as the adsorbent 4 are charged in the large-diameter casing body 2 and leveled off as described above, as shown in FIG. 3, the air permeable member 15 having a predetermined thickness is inserted into the large-diameter casing body 2 together with the retainer member 18 in such a manner that the air permeable member 15 is stacked on the top surface of the adsorbent 4. At this time, the air permeable member 15 is in a free state in which the air permeable member 15 is not compressed by an external force.

Upon setting the retainer member 18, as shown in FIG. 3, the toothed projecting portion 23 in each of the three circumferential positions of the retainer member 18 is allowed to be in alignment with the introduction portion 22 of the toothed grooved portion 20 in each of the three circumferential positions of the large-diameter casing body 2 so as to be identical in phase to each other. Subsequently, the retainer member 18 is rotated in a clockwise direction as indicated by arrow P shown in FIG. 5 while being pushed into the large-diameter casing body 2 through the open end thereof. As a result, the retainer member 18 is brought into a screwed and fixed state relative to the large-diameter casing body 2 on the same principle as that of screwing function.

In this case, the retainer member 18 should be screwed into the large-diameter casing body 2 until the air permeable member 15 pushed by the retainer member 18 is compressively deformed to an appropriate degree by a force of screwing the retainer member 18. During the rotation of the retainer member 18, the toothed projecting portion 23 is guided along the inner surface of the toothed grooved portion 20 which is formed with no teeth and opposed to the teeth 21. Subsequently, as shown in FIG. 4, the teeth 24 of the toothed projecting portion 23 and the teeth 21 of the toothed grooved portion 20 are brought into meshing engagement with each other. Owing to the meshing engagement between the teeth 24 and the teeth 21, the retainer member 18 can be stepwise held in an optional position relative to the large-diameter casing body 2 in the pushing (screwing) direction of the retainer member 18.

Specifically, when the retainer member 18 is screwed into the large-diameter casing body 2 until the air permeable member 15 is compressively deformed to an appropriate degree, the screwing (pushing) force being applied to the retainer member 18 is released. By releasing the screwing force, the teeth 24 of the toothed projecting portion 23 of the retainer member 18 are brought into meshing engagement with the teeth 21 of the toothed grooved portion 20 of the large-diameter casing body 2. The retainer member 18 can be held in the optional position through the meshing engagement between the teeth 24 and the teeth 21, so that removal of the retainer member 18 from the large-diameter casing body 2 can be prevented. Further, the air permeable member 15 can be kept in the appropriately compressively deformed state. The retainer member 19 on the side of the small-diameter casing body 3 is set in the same manner as that of the setting work for the retainer member 18 as described above.

With the above-described construction, the adsorbents 4 filled in the respective casing bodies 2, 3 can be compressively retained by the appropriate elastic forces of the respective air permeable members 15, 17.

As a result, even in a case where a position of an end surface of the adsorbent 4 is finely changed due to variation in fill amount or fill rate of the granular adsorbent 4 in each of the casing bodies 2, 3 or variation in capacity of each of the casing bodies 2, 3 which is caused upon being manufactured, the variation in position of the end surface of the adsorbent 4 can be adsorbed by adjusting a degree of screwing of each of the retainer members 18, 19.

Further, in a case where variation in capacity of the respective casing bodies 2, 3 or so-called rattling phenomenon of the adsorbent 4 occurs due to wear of the adsorbent 4 after the assembling work of the canister 100 is completed or after the completed canister 100 is actually installed to the vehicle, the respective air permeable members 15, 17 appropriately compressively deformed can adsorb the variation in capacity of the respective casing bodies 2, 3 or suppress the rattling phenomenon of the adsorbent 4.

In the following step subsequent to the completion of screwing the retainer members 18, 19 into the corresponding casing bodies 2, 3, the common cover member 9 shown in FIG. 2 and FIG. 3 is fixed to the open end surfaces of the respective casing bodies 2, 3 by such a suitable method as welding. The thus assembled canister 100 as shown in FIG. 1 is obtained.

As explained above, in the canister 100 according to the first embodiment of the present invention, variation in position of the end surface of the adsorbent 4 accommodated in each of the casing bodies 2, 3 can be adsorbed without excessively deforming each of the air permeable members 15, 17. Therefore, an appropriately compressively deformed state of each of the air permeable members 15, 17 as the elastic molding material can be stably maintained, and a thickness of each of the air permeable members 15, 17 can be minimized. Accordingly, an air permeability necessary to each of the air permeable members 15, 17 can be sufficiently ensured, and a durability thereof can be enhanced.

Further, since the tooth-shaped positioning retention mechanism 25 is formed by combination of the toothed grooved portion 20 of each of the casing bodies 2, 3 and the toothed projecting portion 23 of each of the retainer members 18, 19, the retainer members 18, 19 are substantially free of removal from the corresponding casing bodies 2, 3 by meshing engagement between the toothed grooved portion 20 and the toothed projecting portion 23 once the retainer members 18, 19 are pushed into the corresponding casing bodies 2, 3. Accordingly, it is possible to further enhance the positioning and retention ability of the tooth-shaped positioning retention mechanism 25 that enables positioning and retention of the air permeable members 15, 17 and the retainer members 18, 19 relative to the corresponding causing bodies 2, 3.

Further, the elastic force of each of the air permeable members 15, 17 is borne by the retainer members 18, 19, and is not exerted on each of the casing bodies 2, 3. Therefore, it is possible to enhance the workability of fixing the cover member 9 to the open end surfaces of the casing bodies 2, 3 by such a suitable method as welding.

Further, the provision of the toothed grooved portion 20 and the toothed projecting portion 23 is not limited to the first embodiment. The toothed grooved portion 20 may be formed in each of the retainer members 18, 19, and the toothed projecting portion 23 may be formed on each of the casing bodies 2, 3.

Further, the air permeable members 15, 17 may be made of any other elastic molding material instead of the urethane foam of the first embodiment as long as the elastic molding material has an appropriately elasticity and an air permeability. Further, the retainer members 18, 19 may be of any other shape, for instance, a porous plate shape, a mesh shape, etc. instead of the grid shape of the first embodiment as long as the retainer member has an air permeability and a sufficient rigidity to back up the air permeable members 15, 17.

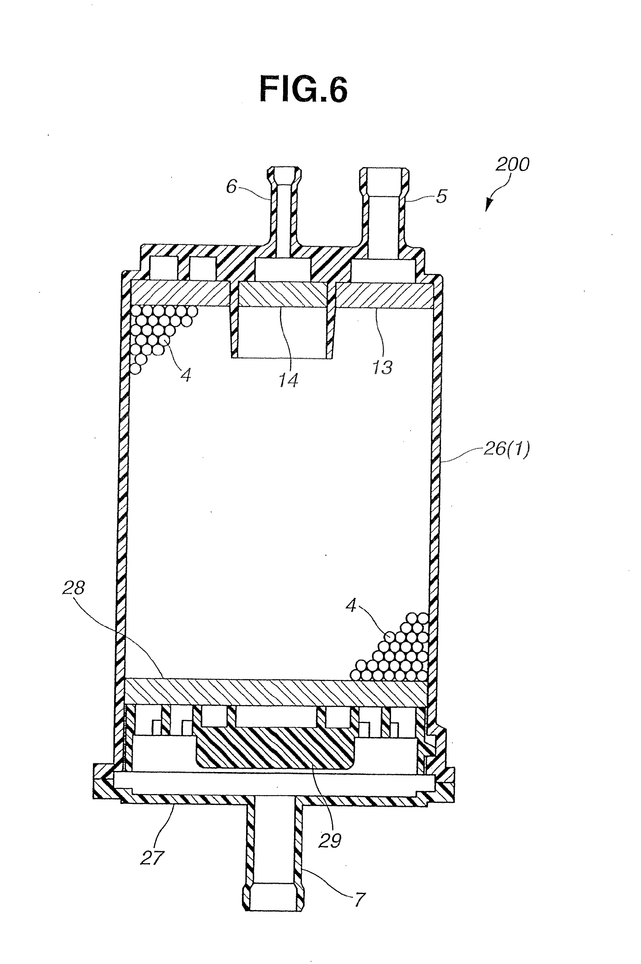

Referring to FIG. 6, a canister according to a second embodiment of the present invention will be explained hereinafter. FIG. 6 is a sectional view of the canister according to the second embodiment of the present invention.

In the canister 100 according to the first embodiment as shown in FIG. 1, the casing 1 includes the casing bodies 2, 3 arranged parallel to each other in a longitudinal direction (axial direction) of the canister 100 and connected with each other at the one open ends through the communication passage 10. In contrast, the canister 200 according to the second embodiment as shown in FIG. 6 differs from the first embodiment in that the casing 1 is constituted of a single casing body 26. That is, the second embodiment substantially corresponds to arrangement in which the casing bodies 2, 3 of the first embodiment are coaxially connected to each other at the one open ends thereof. Like reference numerals denote like parts, and therefore, detailed explanations therefor are omitted.

As shown in FIG. 6, the canister 200 includes the casing 1 including a cylindrical casing body 26, a cover member 27, an air permeable member 28 and a retainer member 29. The casing body 26 has one open end closed by the cover member 27, and the other end formed with the charge port 5 and the purge port 6. The cover member 27 has a generally disk shape, and has the atmospheric vent port 7 in a central portion thereof. The air permeable member 28 is a urethane foam similarly to the air permeable members 15, 17 of the canister 100 according to the first embodiment. The retainer member 29 is arranged in a stacked relation to the air permeable member 28, and is a cylindrical grid made of a resin material, similarly to the retainer members 18, 19 of the canister 100 according to the first embodiment. The canister 200 also includes a tooth-shaped positioning retention mechanism having the same construction as that of the tooth-shaped positioning retention mechanism 25 of the canister 100 according to the first embodiment.

The canister 200 according to the second embodiment can attain the same effects as those of the canister 100 according to the first embodiment.

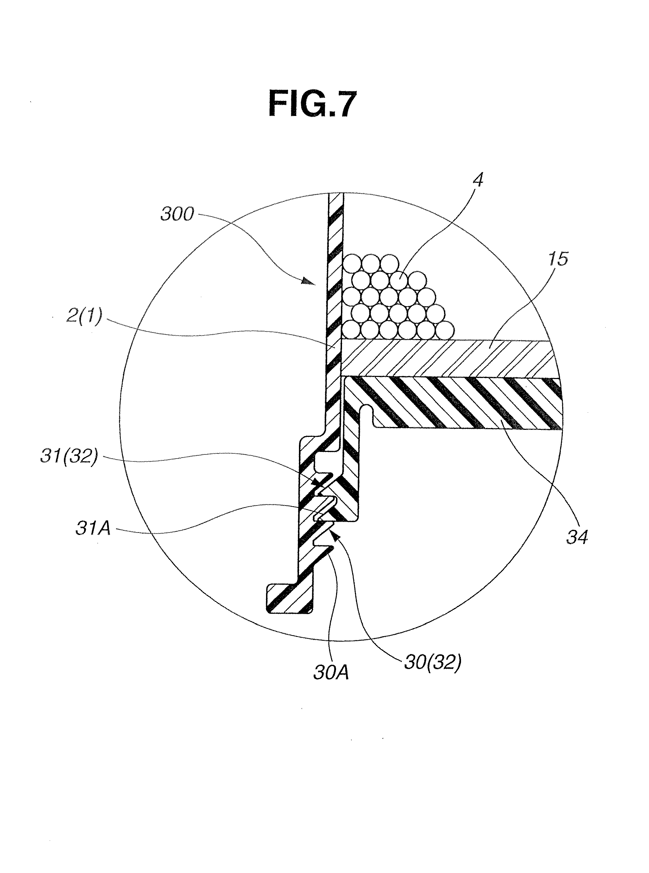

Referring to FIG. 7, a canister according to a third embodiment of the present invention will be explained hereinafter. The third embodiment differs from the first embodiment in construction of the tooth-shaped positioning retention mechanism. Like reference numerals denote like parts, and therefore, detailed explanations therefor are omitted.

As shown in FIG. 7, the canister 300 according to the third embodiment includes a tooth-shaped projecting portion 30 formed on an inner circumferential surface of the casing body 2 on the side of the one open end of the casing body 2. The tooth-shaped projecting portion 30 is located in each of positions equidistantly spaced from each other in the circumferential direction of the casing body 2. The tooth-shaped projecting portion 30 includes a plurality of annular projections 30A extending in parallel with each other along the circumferential direction of the casing body 2. The canister 300 also includes a generally cylindrical retainer member 34 arranged in a stacked relation to the air permeable member 15. The retainer member 34 having an air permeability and a rigidity is a grid made of a resin material. The retainer member 34 includes a tooth-shaped projecting portion 31 formed on an outer peripheral surface of the retainer member 34. The tooth-shaped projecting portion 31 is located in each of positions equidistantly spaced from each other in a circumferential direction of the retainer member 34. The tooth-shaped projecting portion 31 includes a plurality of annular projections 31A extending in parallel with each other along the circumferential direction of the retainer member 34. The tooth-shaped projecting portion 30 and the tooth-shaped projecting portion 31 cooperate with each other to form a tooth-shaped positioning retention mechanism 32 that enables positioning and retention of the retainer member 34 relative to the casing body 2 in an optional position in the pushing direction in which the retainer member 34 is pushed into the casing body 2. Thus, the tooth-shaped projecting portion 30 is disposed along the circumferential direction of the casing body 2, and the tooth-shaped projecting portion 31 is disposed along the circumferential direction of the retainer member 34. That is, the tooth-shaped projecting portions 30, 31 have no helix angle. In this point, the tooth-shaped projecting portions 30, 31 differ from the toothed grooved portion 20 and the toothed projecting portion 23 of the canister 100 according to the first embodiment which are provided in the helical form.

Upon assembling the canister 300 according to the third embodiment, the retainer member 34 is simply pushed into the casing body 2 without being rotated. When the air permeable member 15 is brought into an appropriately compressively deformed state through the retainer member 34, the pushing force applied to the retainer member 34 is released to thereby allow meshing engagement between the tooth-shaped projecting portion 30 and the grooves and the tooth-shaped projecting portion 31. With the meshing engagement between the tooth-shaped projecting portion 30 and the tooth-shaped projecting portion 31, the retainer member 34 can be placed and held in a stepwise optional position in a direction of the pushing force. As a result, the retainer member 34 can be prevented from being removed from the casing body 2, and the air permeable member 15 can be kept in the appropriately compressively deformed state.

Accordingly, the canister 300 according to the third embodiment can attain the same effects as those of the canister 100 according to the first embodiment.

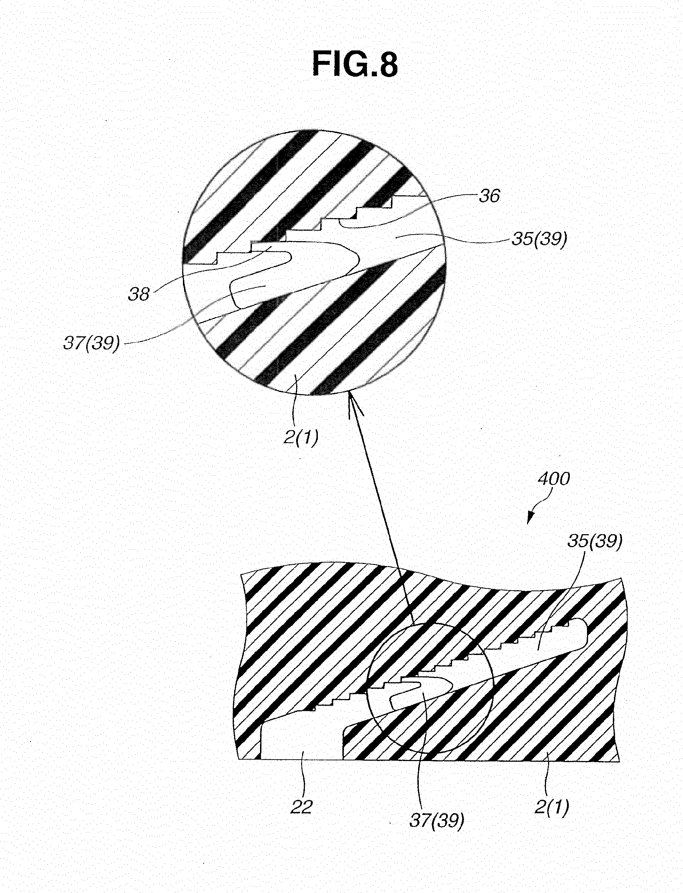

Referring to FIG. 8, a canister according to a fourth embodiment of the present invention is explained. The fourth embodiment differs from the first embodiment in construction of the tooth-shaped positioning retention mechanism. Like reference numerals denote like parts, and therefore, detailed explanations therefor are omitted. FIG. 8 is an enlarged sectional view of an essential part of the canister according to the fourth embodiment corresponding to the sectional view shown in FIG. 4, and shows a tooth-shaped positioning retention mechanism of the canister according to the fourth embodiment together with a more enlarged part thereof as circled.

As shown in FIG. 8, the canister 400 includes a helical toothed grooved portion 35 formed at a helix angle in the inner circumferential surface of the large-diameter casing body 2 on the side of the one open end of the large-diameter casing body 2, similarly to the toothed grooved portion 20 of the canister 100 according to the first embodiment. The toothed grooved portion 35 is located in each of positions equidistantly spaced from each other in the circumferential direction of the large-diameter casing body 2. The toothed grooved portion 35 includes a plurality of teeth 36 each having a step shape finer than that of the teeth 21 of the toothed grooved portion 20 of the canister 100 according to the first embodiment. The canister 400 also includes a toothed projecting portion 37 formed at a helix angle on the outer circumferential surface of the retainer member 18. The toothed projecting portion 37 is located in each of positions equidistantly spaced from each other in the circumferential direction of the retainer member 18. The toothed projecting portion 37 projects from the outer circumferential surface of the retainer member 18 in the radially outward direction of the retainer member 18. The toothed projecting portion 37 has a toothed bullet shape as shown in FIG. 8. The toothed projecting portion 37 has a single tooth 38 formed into a thinned pawl having such a small thickness as to generate a self-elastic force. The toothed grooved portion 35 and the toothed projecting portion 37 cooperate with each other to form the tooth-shaped positioning retention mechanism 39. Similarly, the small-diameter casing body 3 includes the same tooth-shaped positioning retention mechanism as the tooth-shaped positioning retention mechanism 39.

In the canister 400 according to the fourth embodiment, similarly to the canister 100 according to the first embodiment, the retainer member 18 is screwed (pushed) into the casing body 2 on the same principle as that of screwing function. Further, a position of the retainer member 18 relative to the casing body 2 can be adjusted more finely in multiple stages. Further, it is advantageous to obtain a so-called click stop feeling during a screwing process of the retainer member 18.

In addition, the thin pawl shape of the tooth 38 of the toothed projecting portion 37 may also be applied to the tooth-shaped positioning retention mechanism 32 of the canister 300 according to the third embodiment as shown in FIG. 7.

This application is based on a prior Japanese Patent Application No. 2012-130314 filed on June 8, 2012. The entire contents of the Japanese Patent Application No. 2012-130314 are hereby incorporated by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. An evaporated fuel treatment device comprising:
a cylindrical casing body (2, 3; 26) having one open end;
a granular adsorbent (4) filled in the casing body (2, 3; 26), the granular adsorbent serving to adsorb and desorb evaporated fuel,
an air permeable member (15, 17; 28) disposed on a side of the one open end of the casing body (2, 3; 26) in a stacked relation to the granular adsorbent, the air permeable member (15, 17; 28) being made of an elastic molding material,
a retainer member (18, 19; 29) disposed on the side of the one open end of the casing body (2, 3; 26) in a stacked relation to the air permeable member (15, 17; 28), the retainer member (18, 19; 29) being in the form of a grid or a porous plate,
a cover member (9; 27) mounted to the one open end of the casing body (2, 3; 26) to close the one open end of the casing body (2, 3; 26); and
a tooth-shaped positioning retention mechanism (25; 32; 39) disposed between an inner circumferential surface of the casing body (2, 3; 26) and an outer circumferential surface of the retainer member (18, 19; 29),
wherein the tooth-shaped positioning retention mechanism (25; 32; 39) allows the retainer member (18, 19; 29) to hold the air permeable member (15, 17; 28) in a compressively deformed state and enables positioning and retention of the retainer member (18, 19; 29) in an optional position relative to the casing body (2, 3; 26) in a pushing direction in which the retainer member (18, 19; 29) is pushed into the casing body (2, 3; 26), and
wherein the tooth-shaped positioning retention mechanism (25; 32; 39) inhibits displacement of the retainer member (18, 19; 29) in a removal direction in which the retainer member (18, 19; 29) is removed from the casing body (2, 3; 26).

2. The evaporated fuel treatment device as claimed in claim 1, wherein the tooth-shaped positioning retention mechanism (25; 32; 39) enables positioning and retention of the retainer member (18, 19; 29) in a stepwise optional position relative to the casing body (2, 3; 26) in the pushing direction.

3. The evaporated fuel treatment device as claimed in claim 2, wherein the casing body (2, 3; 26) has a circular section,
wherein the air permeable member (15, 17; 28) and the retainer member (18, 19; 29) have a circular section,
wherein the tooth-shaped positioning retention mechanism (25; 39) includes a helical toothed grooved portion (20; 35) formed in one of the inner circumferential surface of the casing body (2, 3; 26) on the side of the one open end thereof and the outer circumferential surface of the retainer member (18, 19; 29), and a toothed projecting portion (23; 37) formed on the other of the inner circumferential surface of the casing body (2, 3; 26) on the side of the one open end thereof and the outer circumferential surface of the retainer member (18, 19; 29), and
wherein when the retainer member (18, 19; 29) is screwed into the casing body (2, 3; 26), the helical toothed grooved portion (20; 35) and the toothed projecting portion (23; 37) are brought into meshing engagement with each other to enable positioning and retention of the retainer member (18, 19; 29) in the stepwise optional position relative to the casing body (2, 3; 26) in the pushing direction through the meshing engagement therebetween and inhibit displacement of the retainer member (18, 19; 29) in the removal direction through the meshing engagement therebetween.

4. The evaporated fuel treatment device as claimed in claim 3, wherein the helical toothed grooved portion (20; 35) is formed in the inner circumferential surface of the casing body (2, 3; 26) on the side of the one open end thereof, and the toothed projecting portion (23; 37) is formed on the outer circumferential surface of the retainer member (18, 19; 29).

5. The evaporated fuel treatment device as claimed in claim 4, wherein the helical toothed grooved portion (20; 35) comprises an introduction portion (22) opened to an one open end surface of the casing body (2, 3; 26) to which the cover member (9; 27) is fixed, the toothed projecting portion (23; 37) being introduced into the helical toothed grooved portion (20; 35) through the introduction portion (22).

6. The evaporated fuel treatment device as claimed in claim 4, wherein the helical toothed grooved portion (20; 35) comprises a plurality of teeth (21; 36) formed on one of opposed inner peripheral surfaces defining the helical toothed grooved portion (20; 35).

7. The evaporated fuel treatment device as claimed in claim 6, wherein the toothed projecting portion (23) comprises a plurality of teeth (24) configured to be meshing-engageable with the plurality of teeth (21) of the helical toothed grooved portion (20).

8. The evaporated fuel treatment device as claimed in claim 6, wherein the toothed projecting portion (37) comprises a single tooth (38) formed into a thinned pawl to be meshing-engageable with the plurality of teeth (36) of the helical toothed grooved portion (35).

9. The evaporated fuel treatment device as claimed in claim 2, wherein the casing body (2, 3; 26) has a circular section,
wherein the air permeable member (15, 17; 28) and the retainer member (34) have a circular section,
wherein the tooth-shaped positioning retention mechanism (32) comprises a first tooth-shaped projecting portion (30) formed on the inner circumferential surface of the casing body (2, 3; 26) on the side of the one open end thereof along a circumferential direction of the casing body (2, 3; 26), and a second tooth-shaped projecting portion (31) formed on the outer circumferential surface of the retainer member (34) along a circumferential direction of the retainer member (34), and
wherein when the retainer member (34) is pushed into the casing body (2, 3; 26), the first tooth-shaped projecting portion (30) and the second tooth-shaped projecting portion (31) are brought into meshing engagement with each other to enable positioning and retention of the retainer member (34) in the stepwise optional position relative to the casing body (2, 3; 26) in the pushing direction through the meshing engagement therebetween and inhibit displacement of the retainer member (34) in the removal direction through the meshing engagement therebetween.

10. The evaporated fuel treatment device as claimed in claim 9, wherein the first tooth-shaped projecting portion (30) comprises a plurality of first annular projections (30A) extending in parallel with each other along the circumferential direction of the casing body (2, 3; 26), and the second tooth-shaped projecting portion (31) comprises a plurality of second annular projections (31A) extending in parallel with each other along the circumferential direction of the retainer member (34).
